Europäisches Patentamt

European Patent Office

Office européen des brevets

(11) Veröffentlichungsnummer: **0 445 716 A1**

# EUROPÄISCHE PATENTANMELDUNG

(21) Anmeldenummer: 91103271.2

(51) Int. Cl.⁵: **B41M 5/124**

(22) Anmeldetag: 05.03.91

(30) Priorität: 07.03.90 DE 4007152

(43) Veröffentlichungstag der Anmeldung:
11.09.91 Patentblatt 91/37

(84) Benannte Vertragsstaaten:
ES FR GB IT SE

(71) Anmelder: **Messerschmitt-Bölkow-Blohm Gesellschaft mit beschränkter Haftung**
**Robert-Koch-Strasse**
**W-8012 Ottobrunn(DE)**

(72) Erfinder: **Kruse, Jürgen**
**Bernhard-Winter-Strasse 15**
**W-2875 Ganderkesee(DE)**
Erfinder: **Kaiser, Joachim, Dr.**
**Heinrich-Gross-Strasse 45**
**W-2800 Bremen 61(DE)**

(54) Verfahren zum Auffinden von Schlagstellen an Bauteilen.

(57) Die Erfindung bezieht sich auf ein Verfahren zum Auffinden von Schlagstellen an Bauteilen, insbesondere an Bauteilen aus faserverstärkten Verbundwerkstoffen. Die Bauteile werden mit einer Beschichtung versehen, welche aufgrund eines Einschlages im Bereich der Schlagstelle ihre Farbe ändert. Damit können sonst nicht mit einer Schichtkontrolle feststellbare Schäden erkennbar gemacht werden.

EP 0 445 716 A1

Die Erfindung bezieht sich auf ein Verfahren zum Auffinden von Schlagstellen an Bauteilen, insbesondere an Bauteilen aus faserverstärkten Verbundwerkstoffen.

Bauteile aus faserverstärkten Verbundwerkstoffen, insbesondere faserverstärkten Kunststoffen müssen gegenwärtig durch aufwendige Kontrollen hergestellt werden, um die gewünschte hohe Qualität der Fertigungparameter zu erhalten. Die Qualität solcher Werkstoffe kann aber während der Einsatzzeit, und zwar durch nicht feststellbare Schädigungen, erheblich beeinflußt werden. Hier kommen vor allem Schlageinwirkungen in Betracht, welche zu erheblichen Schädigungen führen können, ohne bei einer Sichtprüfung aufzufallen. Da insbesondere an großen Bauteilen solche Schädigungen ohne aufwendige Prüfverfahren nicht wahrnehmbar sind, ist es unbefriedigend, Schlagschäden nicht feststellen zu können.

Der Erfindung liegt daher die Aufgabe zugrunde, ein einfaches Verfahren vorzusehen, mit dessen Hilfe sich Schlagschäden an Bauteilen feststellen lassen.

Diese Aufgabe ist gemäß der Erfindung durch ein Verfahren gelöst, bei dem die Bauteile mit einer Beschichtung versehen werden, welche bei einer Druckbeaufschlagung im Bereich der Einwirkstelle ihre Farbe ändert, und bei dem die Bauteile in regelmäßigen Abständen einer Sichtprüfung unterzogen werden.

Weiterbildungen und vorteilhafte Ausgestaltungen des Verfahrens nach der Erfindung sind den Ansprüchen 2 bis 10 zu entnehmen.

Bei dem erfindungsgemäßen Verfahren wird aufgrund der Beschichtung der Bauteile eine deutlich sichtbare Markierung nach einer kritischen Schlagwirkung erzeugt. Es ist daher durch die weiterhin vorgesehene, in regelmäßigen Abständen durchzuführende, einfache Sichtprüfung möglich, die Bauteile auf mögliche Schadensorte zu überprüfen. Mit einer nachfolgend durchführbaren zerstörungsfreien Prüfung des markierten Einschlagbereiches kann dann das Ausmaß der eingetretenen Schädigung ermittelt werden. Die Markierung einer Einschlagstelle mit Hilfe einer erfindungsgemäßen Beschichtung erleichtert daher ganz erheblich das Überwachen insbesondere großer Bauteile.

Es ist zweckmäßig für die Beschichtung eine Basissubstanz mit drei Wirksubstanzen zu benutzen. Die erste Wirksubstanz besteht dabei aus einem Zünder, die zweite aus einem Farbstoff und die dritte aus einem das Reagieren des Farbstoffes begrenzenden Inhibitor. Für die Basissubstanz kann ein Lacksystem benutzt werden, welches die drei Wirksubstanzen z.B. in pulverisierter Form enthält. Die erste Wirksubstanz, und zwar der Zünder, nimmt die kinetische Energie eines Einschlages auf und wandelt diese Energie in chemische Energie um. Diese Energie pflanzt sich durch die Wirksubstanz des Zünders fort und gibt dabei einen Anteil dieser Energie an die zweite Wirksubstanz, und zwar den Farbstoff, ab. Der Farbstoff ändert durch die Aufnahme der chemischen Energie seine Farbe, während die dritte Wirksubstanz, und zwar der Inhibitor, die Aktivierung auf die Einschlagstelle begrenzt, indem er eine Fortpflanzung der Reaktion verhindert. Mit der Höhe seines Anteils wird zugleich die Sohlagempfindlichkeit eingestellt.

Aufzeichnungssubstanzen, die bei einer Druckbeaufschlagung ihre Farbe ändern, sind beispielsweise in der EP-OS 0 055 847 angegeben, in der ein druckempfindlicher, blattförmiger Aufzeichnungsträger beschrieben ist. Dieses bekannte Aufzeichnungsmaterial besteht aus einem Farbstoff vom Methin-Typ, einer unsublimierbaren organischen oxidierenden Verbindung als Zünder sowie einem Inhibitor oder Sequestriermittel auf Alkanolamin und/oder Metallionenbasis. Derartige Aufzeichnungsträger finden vor allem als Durchschreibpapiere sowohl für die manuelle Beschriftung als auch in Schreibmaschinen und Druckern Verwendung.

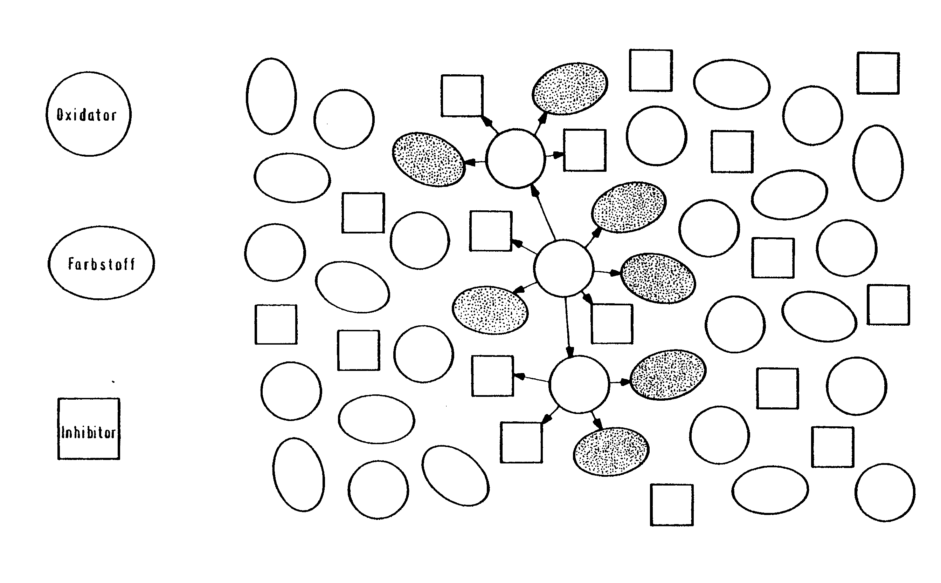

In der beigefügten Zeichnung ist die Funktion des erfindungsgemäßen Verfahrens beispielhaft dargestellt.

Als Basissubstanz ist bei dem hier beschriebenen Ausführungsbeispiel ein Harz benutzt, z.B. ein für Farben oder Lacke benutzbares Harz. Den Zünder kann ein Oxidator bilden, z.B. ein bei Aufschlagzündern benutzter Oxidator. Wenn nun der Oxidator durch eine in der Bildmitte angedeutete Schlagwirkung lokal aktiviert wird, dann geht die Energie des Schlages in die Beschichtung, und zwar im Bereich der Einschlagstelle, über. Auf diese Weise werden Oxidatorteile aktiviert, Teile des Farbstoffes (schattiert gezeichnet) oxidiert, und Anteile der kinetischen Energie von der Inhibitorkomponente absorbiert. Der Farbstoff ändert dabei aufgrund der Oxidation seine Farbe. Solche Farbstoffe mit oxidativen Farbumschlägen sind bekannt, so daß sich geeignete an den jeweiligen Einsatzzweck angepaßte Farbpaare (Farben der beiden Farbzusätze) auswählen lassen.

Es ist möglich, mit der Wahl der Anteile der drei Wirksubstanzen die Schlagempfindlichkeit und die Größe eines Einschlages, d.h. den räumlichen Bereich des Farbumschlages, in gewissen Grenzen einzustellen. Dabei ist es auch möglich, die Basiskomponente so zu wählen, daß sie gleichzeitig als Inhibitor dient. Außerdem können der Zünder und der Farbstoff in einer beide Wirkkomponenten vereinenden Substanz verwirklicht werden. Weiterhin ist es auch möglich, den Farbumschlag dadurch herbeizuführen, daß ein inaktives Farbpigment, welches im wesentlichen die Farbgebung der Beschichtung im nichtaktivierten Zustand bestimmt, durch eine zweite aktive Teilkomponente der Farbstoffwirksubstanz in ihrer Farbgebung nach Auslösung der Reaktion durch eine kritische Schlagwirkung verändert wird. Dies kann z.B. durch Zerstörung des inaktiven Farbpigmentes oder durch Mischfarbenbildung aus aktiver und vor der Zündung farbloser inaktiver Komponente der Farbstoff-Wirksubstanz erfolgen.

**Patentansprüche**

1. Verfahren zum Auffinden von Schlagstellen an Bauteilen, insbesondere an Bauteilen aus faserverstärkten Verbundwerkstoffen, dadurch gekennzeichnet, daß die Bauteile mit einer Beschichtung versehen werden, welche bei einer Druckbeaufschlagung im Bereich der Einwirkstelle ihre Farbe ändert, und daß die Bauteile in regelmäßigen Abständen einer Sichtprüfung unterzogen werden.

2. Verfahren nach Anspruch 1, dadurch gekennzeichnet, daß eine Beschichtung eingesetzt wird, die aus einer drei Wirksubstanze enthaltenden Basissubstanz besteht, wobei die erste Wirksubstanz der Zünder, die zweite wirksubstanz der Farbstoff und die dritte Wirksubstanz ein das Reagieren des Farbstoffes begrenzender Inhibitor ist.

3. Verfahren nach Anspruch 1 oder 2, dadurch gekennzeichnet, daß eine Basissubstanz eingesetzt wird, die aus einem die wirksubstanzen enthaltenden Lacksystem besteht.

4. Verfahren nach einem der Ansprüche 1 bis 3, dadurch gekennzeichnet, daß für den Zünder ein durch Schlageinwirkung aktivierbarer Oxidator eingesetzt wird.

5. Verfahren nach einem der Ansprüche 1 bis 4, dadurch gekennzeichnet, daß für den Farbstoff eine durch Oxidation seine Farbe wechselnder Farbstoff eingesetzt wird.

6. Verfahren nach einem der Ansprüche 1 bis 5, dadurch gekennzeichnet, daß für den Inhibitor eine die Schlagenergie absorbierende Substanz eingesetzt wird.

7. Verfahren nach einem der Ansprüche 1 bis 5, dadurch gekennzeichnet, daß die drei Wirksubstanzen so gewählt werden, daß die Schlagempfindlichkeit und/ oder der Markierungsbereich der Einschlagstelle einstellbar ist.

8. Verfahren nach einem der Ansprüche 1 bis 7, dadurch gekennzeichnet, daß die Basissubstanz so gewählt wird, daß sie gleichzeitig die Funktion der Inhibitor-Wirksubstanz erfüllt.

9. Verfahren nach einem der Ansprüche 1 bis 8, dadurch gekennzeichnet, daß die Wirksubstanz des Zünders und die des Farbstoffes so gewählt werden, daß sie in einer Substanz vereinigt sind.

10. Verfahren nach einem der vorhergehenden Ansprüche, dadurch gekennzeichnet, daß die Wirksubstanz des Farbstoffes so gewählt wird, daß sie aus die Farbgebung der Beschichtung im inaktiven Zustand bestimmenden inaktiven Farbpigmenten und aktiven Zusatzpigmenten besteht, welche nach Zündung der Reaktion durch die Schlagenergie den Farbeindruck der Beschichtung verändert.

Oxidator

Farbstoff

Inhibitor

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-4 120 40 (E.HAAS)<br>* das ganze Dokument * | 1-10 | B 41 M 5/124 |
| A | GB-A-1 107 960 (AVERY PRODUCTS CORPORATION)<br>* Seite 2, Zeilen 26 - 43 * * Seite 2, Zeilen 84 - 105 * | 1-10 | |
| A | WO-A-8 912 214 (J.S.LEE)<br>* Seite 2, Zeile 23 - Seite 3, Zeile 1; Figur 1 * * Seite 7, Zeile 30 - Seite 8, Zeile 21 * | 1-10 | |

RECHERCHIERTE SACHGEBIETE (Int. Cl.5)

B 41 M
G 01 M

Der vorliegende Recherchenbericht wurde für alle Patentansprüche erstellt

| Recherchenort | Abschlußdatum der Recherche | Prüfer |
|---|---|---|
| Den Haag | 27 Mai 91 | BACON,A.J. |